# EUROPEAN PATENT APPLICATION

(11) **EP 3 093 699 A1**
(43) Date of publication of application: **16.11.2016**
(21) Application number: 14878333.5
(22) Date of filing: 18.04.2014
(51) Int. Cl.: G02B 7/09, H02K 33/18

(54) **ZOOM LENS DRIVING DEVICE AND ZOOM LENS**

(30) Priority: 08.01.2014 CN 201410008023
(71) Applicant: Bolymedia Holdings Co. Ltd., Santa Clara, California 95051 (US)
(72) Inventor: HU, Xiaoping, Shenzhen Guangdong 518055 (CN)
(74) Representative: Manitz, Finsterwald & Partner GbR
(86) International application number: PCT/CN2014/075702
(87) International publication number: WO 2015/103821

(57) **Abstract**

A zoom lens driving device and a zoom lens. The driving device comprises a focus motor (402) and a zoom motor (403) that are respectively used for driving a first focus lens group (411) and a first zoom lens group (414) to move axially. At least one of the focus motor and the zoom motor is a disc-type electromagnetic motor in which a stator (410) and a rotor (403) have a hollow structure. The disc-type electromagnetic motor having a hollow structure is used as the lens driving motor, is easy to process, and is easy to be combined with another motor, for example, another disc-type electromagnetic motor or voice coil motor or ultrasonic motor to form a compact structure, thereby meeting the requirements of zoom lens of micro to large sizes.

## Description

### TECHNICAL FIELD

The present disclosure relates to optical technical field, specifically to a zoom lens assembly driving device and a zoom lens assembly.

### BACKGROUND

With the promotion and popularization of the digital imaging technologies, the optical imaging device is widely used in a variety of equipments, such as a wide variety of portable and miniaturized equipments. Therefore, there are broad needs for miniaturized optical imaging devices, such as compact zoom lens assemblies.

The zoom lens assembly generally has two independent motions. One is the zoom motion, and the other is the focus motion. In general, the two motions are implemented by two independent motors, respectively.

In order to enable a precise focus adjustment of the imaging device in a case of miniaturization, it has been proposed that an ultrasonic motor (USM) driven by screw threads is used to implement the focus adjustment (referring to a PCT application with a publication No. WO2007118418) and the zooming (referring to a Chinese application with a publication No. CN102590979A). However, in the case that both the zooming and the focusing are implemented by the ultrasonic motor, the processing difficulty is high, many precision processing equipments are required, and the consistency and the yield are low.

Currently, for a micro lens assembly used in a cell phone, the most widely used focusing motor is a voice coil motor (VCM), which is inexpensive, is simple in structure and has high focusing speed, but has large power consumption and short travel. Therefore, it is hard for the voice coil motor to be used for zooming. With respect to the zooming motion, currently there is no mainstream motor-driving solution yet.

### SUMMARY

According to an aspect of the present disclosure, a zoon lens assembly driving device is provided. The zoom lens assembly driving device may include a focusing motor and a zooming motor which may be used to drive a first focus lens group and a first zoom lens group to move axially, respectively. At least one of the focusing motor and the zooming motor may be a disc electromagnetic motor. The stator and the mover of the disc electromagnetic motor may be hollow. The rotation axis of the mover of the disc electromagnetic motor may coincide with the optical axis of the first focusing lens group and the first zoom lens group.

According to another aspect of the present disclosure, a zoom lens assembly is provided, which may include the zoom lens assembly driving device described above and a lens group which is installed in a corresponding lens support member and needs to be moved.

In the zoom lens assembly of the present disclosure, the disc electromagnetic motor with hollow structures is used as the motor for driving the lens assembly, in particular as the zooming motor. Therefore, not only the processing is facilitated, but also another motor can be easily introduced to form a compact lens assembly, and thereby the requirements of micro to large zoom lens assemblies can be satisfied.

The specific examples of the present disclosure will be described in details in following with reference to the drawings. In the present disclosure, the terms of "first", "second" or the like are used merely for distinguish, but do not meant any order or additional technical sense.

### BRIEF DESCRIPTION OF DRAWINGS

FIG. 1 is a schematic view of the structure of a disc electromagnetic motor of the present disclosure;
FIG. 2 is a schematic view of the structure of a voice coil motor of the present disclosure;
FIG. 3 is a schematic view of the winding mode of a four-layer printed circuit of the present disclosure;
FIG. 4 is a schematic view of the winding mode of another four-layer printed circuit of the present disclosure;
FIG. 5 is a schematic view of the structure of an ultrasonic motor of the present disclosure;
FIG. 6 is a schematic view of a transmission structure of mover of the present disclosure;
FIG. 7 is a schematic view of another transmission structure of mover of the present disclosure;
FIG. 8 is a schematic view of the structure of the zoom lens assembly in embodiment 1;
FIG. 9 schematically shows two implements of the stator winding in embodiment 1;
FIG. 10 is a schematic view of the structure of the zoom lens assembly in embodiment 2; and
FIG. 11 is a schematic view of the structure of the zoom lens assembly in embodiment 3.

### DETAILED DESCRIPTION

The zoom lens assembly driving device according to the present disclosure may include a focusing motor which may drive a first focus lens group to move axially and a zooming motor which may drive a first zoom lens group to move axially. In the present disclosure, a moving part in the motor may be referred to as a mover (for example, the mover in a linear motor or the rotor in a rotating motor), and a relatively fixed part in the motor may be referred to as a stator. At least one of the focusing motor and the zooming motor mentioned above may be a disc electromagnetic motor.

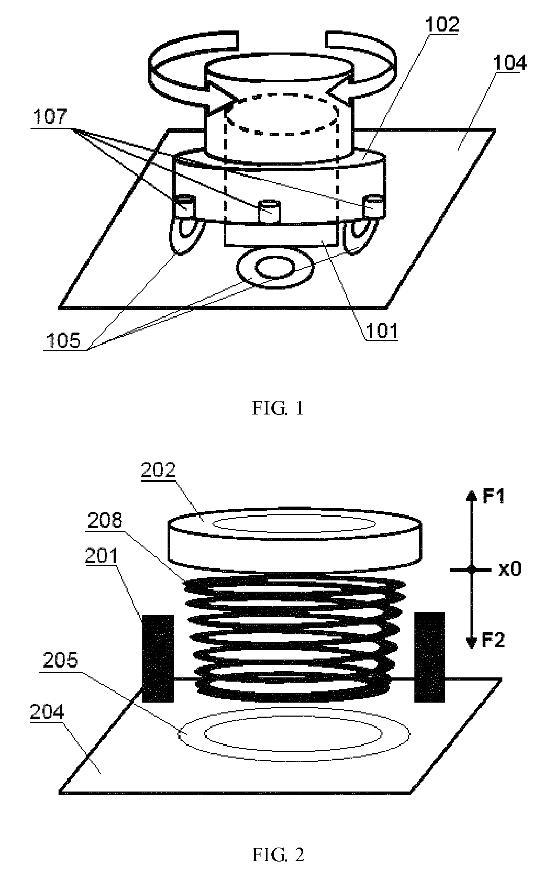

The disc electromagnetic motor of the present disclosure may utilize the principle and structures as described in a Chinese application with an application number CN201310677074.4 and titled "electromagnetic motor". One of the structures may be schematically shown in FIG. 1, which may include a stator 101 and a mover 102. The stator and the move may be hollow. A rotation axis of the mover may coincide with an optical axis of a first focus lens group and a first zoom lens group. Specifically, the stator may be a hollow positioning sleeve and be fixed with respect to a substrate 104. At least two stator windings 105 (four are schematically shown in FIG. 1, one of which is sheltered by the positioning sleeve) may be arranged on the substrate. At leas one pair of magnetic poles 107 may be mounted at the bottom of the mover. In FIG. 1, the mover may be sleeved at outside of the stator and can rotate around the stator. In other embodiments, the mover may also be sleeved at inside of the stator such that it is possible for the two motors to share one stator.

The mover of the disc electromagnetic motor may be a pure iron core. In this case, the magnetic poles of the mover can be simply embedded in the iron core. The mover may also be made from non-magnetic materials, such as plastic materials, etc., and the magnetic poles of the mover may be mounted on the surface of or embedded in the non-magnetic materials. The mover may also include two parts. The bottom part may be a magnetic pole ring (a ring made from magnetic or non-magnetic materials and embedded with magnetic poles) and the upper part may be a sleeve made from magnetic materials or magnetism reception materials. The magnetic poles may not protrude from the end face. A casing may be provided such that the magnetic poles are flush with or slightly depressed with respect to the end face of the casing. When AC or DC power is supplied to the stator windings according to certain rules, a rotating magnetic field will be generated between the stator windings and the magnetic poles of the mover. The magnetic field will bring the mover to rotate through the magnetic poles. This kind of disc electromagnetic motor is hollow, such that the lens assembly can be installed therein and thereby a good focusing and zooming structure is achieved. A step control is preferably used in the disc electromagnetic motor of the present disclosure such that a precise displacement control can be achieved without measuring the movement of the mover.

The disc electromagnetic motor described above may be preferably used as a zooming motor, and the corresponding focusing motor may be another disc electromagnetic motor or a voice coil motor or an ultrasonic motor. The zooming motor may be preferably sleeved at outside of the focusing motor, such that a zoom lens assembly with larger caliber can be used. On one hand, it is suitable for the installation of a wide-angle lens assembly, on the other hand, the lens assembly structure which is gradually larger from inside to outside is easy to be installed, and the installation difficulty can be reduced.

The voice coil motor of the present disclosure may utilize the principle and structures as described in a Chinese application with an application number of CN201310748592.0 and titled "driving device and device manufacture method". One of the structures may be schematically shown in FIG. 2, which may include a hollow stator 201 and a mover 202. The stator and the mover may be connected by an elastic member 208. Specifically, the stator may be a hollow positioning sleeve and be fixed with respect to a substrate 204. A stator winding 205 may be arranged on the substrate and a permanent magnet may be arranged at the mover. After power is supplied to the stator winding, the mover is linearly moved under the action of the electromagnetic field of the stator. A movement of the mover in an opposite direction may be achieved by supplying a reverse current to the stator winding or utilizing the restoring force of the elastic member. In general, the elastic member shown in FIG. 2 may be a stereo helical spring. In specific embodiments, a variety of elastic member with different forms may be used as needed, such as a planar spring leaf made by a metal etching process, etc. In the case that a spring is used as the elastic member, the spring may simultaneously act as a driving coil, and thereby the stator winding can be omitted. Of course, it may also be possible to use both the spring and the stator winding as the driving coil. In this case, the spring may have good conductivity. For example, the spring may be a steel spring plated by copper and coated by insulation materials.

In order to efficiently reduce the power consumption, a preferred design may be used by the voice coil motor shown in FIG. 2. For example, in the case that the power has not been supplied, the elastic member 208 of the voice coil motor is balanced at a force balance position x0 under the action of an elastic force F1 of its own and a preexisting magnetic force F2 opposite to the elastic force F1 in direction. When x is used to represent a position variable which coordinates the position where the deformation of the elastic member is zero as the origin (it is obvious that x also represents the deformation at the same time), F1 and F2 may be simplistically expressed as F1 = k1 *x ,F2 = F0 + k2*x. F0 is the magnitude of F2 acting on the elastic member at the position where the deformation is zero. k1 and k2 are variation factors of the elastic force and the magnetic force, respectively, have same signs but are opposite to each other in direction, and may be constant or variable. Since F1=F2 at the position x0, it can be deduced that x0 = F0 / (k1 - k2). Therefore, when the voice coil motor is working in the vicinity of the force balance position x0, the equivalent variation factor of the elastic member which needs to be overcome by the driving force of the coil is merely (k1-k2), which is smaller than the variation factor k1 when F2 is not applied, and therefore the power consumption can be reduced.

In some embodiments, the force balance position x0 may be located at one of or between two endpoints of the working range of the elastic member, and thereby the zero power consumption in corresponding working state can be maintained.

F2 may be provided by two magnets. For example, a first magnet may be a permanent magnet arranged at the mover and a second magnet may be a positioning sleeve made from permanent magnetic or magnetism reception materials. In order to simplify the structure, a steel spring may be used as the second magnet. In a structure which is mostly simplified, a steel spring plated with copper and coated by insulation materials may simultaneously act as the elastic member, the driving coil and the second magnet.

In some embodiments, the stator winding of the focusing motor and/or the zooming motor of the present disclosure may be made from a printed circuit. For example, the stator windings of the disc electromagnetic motor and the voice coil motor described above may be printed circuit. The printed circuit may be formed at a hard board, such as a printed circuit board (PCB), or at a soft board, such as a flexible printed circuit board (FPC). Each of the PCBs or FPCs may be provided with a single-layer circuit, or may also be formed from two or more layers of circuit, such as two, four, six, eight, ten, twelve layers of circuit, etc. With the stator winding made from printed circuit, on one hand, the difficult and precise winding operation for a mico-motor can be completely omitted, on the other hand, the PCB or FPC printed with the winding may act as the substrate of the zoom lens assembly, on which a sensitive chip, a control circuit and the like can be arranged, and thereby a more compact lens assembly can be achieved.

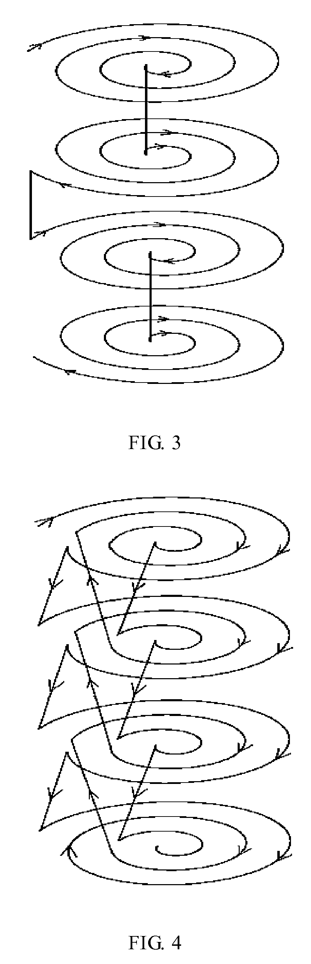

Based on mature technologies for manufacturing a printed circuit, the structure of the printed circuit may be arranged according to a predetermined coil configuration, and the winding required may be obtained by one single unit (one PCB or FPC) or by splicing a plurality of PCBs or FPCs (the wires which are located at the ends and need to be connected may be welded). Referring to FIG. 3 and FIG. 4, two typical arrangements of printed circuit are shown, in which the arrows indicate the directions of the currents. A person skilled in the art will readily understand that the arrangement and/or the splicing mode of the printed circuit can be correspondingly designed according to the configuration required by the winding. In FIG. 3, a planar spiral winding overlapped in axial direction is shown, where the wire is spirally wound in a single layer first, and then enters into another layer through a perforation and continues to be spirally wound. Each layer of spiral circuit may be one single-layer PCB or FPC, or be one layer of a multi-layer PCB or FPC. The layers may be connected by conductive vias (the same below). In FIG. 4, a layered 3D spiral winding nested in radial direction is shown, where the wire is spirally wound between different layers first, and then is three-dimensionally spirally wound from inside to outside (or from outside to inside), which can be regarded as a nesting of several vertical coils with different diameters.

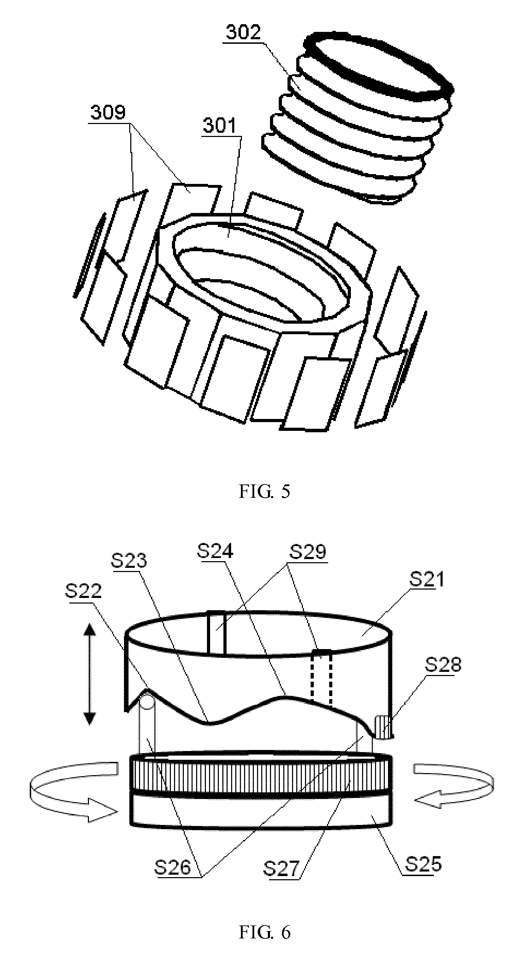

The ultrasonic motor of the present disclosure may utilize the principle and structures as described in a Chinese application with a publication number of CN1873455A and titled "a zooming/focusing system for integrated optical equipment". One of the structures may be schematically shown in FIG. 5, which may include hollow stator 301 and mover 302. The rotation axis of the mover of the ultrasonic motor may coincide with the rotation axis of the mover of the disc electromagnetic motor. Specifically, piezoelectric materials 309 may be attached on one of the stator and the mover of the ultrasonic motor. Metal wires (not shown) may be bonded or welded to each of the piezoelectric materials through a FPC, such that electric signals for exciting the piezoelectric materials can be transmitted through the metal wires. The piezoelectric materials can vibrate the stator or the mover on which the piezoelectric materials are attached by the excitation of the electric signals to generate traveling waves and thereby drive the mover to rotate by the fit (for example, a screwed fit or a circumferential surface friction fit) between the stator and the mover. The ultrasonic motor shown in FIG. 5 is a polyhedral ultrasonic motor. For example, the surface of the stator or the mover on which the piezoelectric materials are attached is a polyhedron, each surface of which is provided with a piezoelectric material. The piezoelectric materials may be, for example, piezoelectric ceramics. In FIG. 5, the stator is sleeved at outside of the mover, an inner wall of the stator is fitted with an outer wall of the mover by screw threads, and an outer wall of the stator is a polyhedron. Or, a converse arrangement may also be used, i.e., the mover is sleeved at outside of the stator, an inner wall of the mover is fitted with the outer wall of the stator by screw threads, and the inner wall of the stator is a polyhedron. The stator on which the piezoelectric materials are attached is generally made of metal, such as copper or aluminum, and the mover driven by the screw threads may be made from any materials, such as plastics or metal. The polyhedral ultrasonic motor described above may be driven by a traveling wave driving.

The mover of the focusing motor and the zooming motor of the present disclosure may drive the lens group to move axially by a variety of suitable transmission structures. In general, the lens group may be fixedly mounted in a corresponding lens support member, such as a lens barrel. The mover may drive the lens group to move by driving the lens support member. The lens support member may be radially fixed such that the lens group can only mover axially. A limitation mechanism along the axial direction (for example, a limitation slide bar extending in the axial direction) may be arranged on the lens support member to implement the radial fixation of the lens support member. The limitation slide bar may pass through a side wall of the lens support member such that the lens support member can slide axially along the slide bar. Or, the side wall of the lens support member may be provided with recesses or projections extending axially which is fitted with corresponding fixation member in order to restrict the lens support member to move only in the axial direction. Of course, in the case that the mover has spiral or linear trajectory, the lens group may also be fixed directly on the mover.

In order to precisely measure the position of the mover of the zooming motor, a Hall magnetic ring and a Hall sensor may be further arranged. One of the Hall magnetic ring and the Hall sensor may be fixed at the mover of the zooming motor (for example, the disc electromagnetic motor), and the other may be fixed with respect to the stator of the zooming motor. The Hall sensor may output measurement signals which represent the rotation angle of the Hall magnetic ring with respect to the Hall sensor. Because a correspondence exists between the rotation of the mover and the axial movement of the lens support member driven thereby, the position of the lens support member can be determined by measuring the rotation of the mover. The measurement data may be sent to a host for related optical calculation and/or control of the movement of the lens group. Of course, because the disc electromagnetic motor is very suitable for implementing a precise movement by a step control, in the case that the disc electromagnetic motor controlled by the step control is used as the zooming motor, the Hall position measurement system may also be omitted.

The mover may be kept in contact with the lens support member driven thereby by applying a pre-pressure. The pre-pressure may be provided by a variety of suitable ways. In an embodiment, an elastic force of a spring may be used. For example, the spring may be used to apply a pressure at an end of the lens support member which does not contact with the mover. In another embodiment, a magnetic force may be used. For example, a magnetic ring may be bonded at an end of the mover which contacts with the lens support member and the lens support member is at least partially made from magnetic or magnetism reception materials, such that the mover is kept in contact with the lens support member by the magnetic attraction force.

Several transmission structures by which the mover drives the lens support member are described in following by way of example. In the specific embodiments, based on the motion of the mover, the focusing motor and the zooming motor may utilize the same transmission structures, or may also utilize different transmission structure according to actual conditions.

### (1) transmission structure with a fit between a support pin and a bump edge

In this transmission structure, the trajectory of the mover (for example, the mover of the disc electromagnetic motor or the ultrasonic motor) may be spiral or circular. One of the mover and the lens support member driven thereby may be provided with the support pin extending axially at an end, and the other may be provided with the bump edge at an end. A free end of the support pin may be kept in contact with the bump edge such that the spiral of circular motion of the mover may drive the lens support member to move axially. With this transmission structure, the shape of the bump edge of the lens support member may be designed to satisfy the requirement of the motion curve of the lens assembly and limit the rotation range of the support pin. For example, Projections may be arranged at two endpoints of the rotation range to stop the movement of the support pin.

An example is shown in FIG. 6. An end face of a lens barrel S21 acting as the lens support member may be provided, according to the optical design, with a bump edge which includes two curved sections. S22 is the endpoint of the retraction of the lens barrel, S23 is the starting point of the zooming, and S24 is the endpoint of the zooming. The curve shown in the figure is merely schematic, and specifically may be determined according to the optical design. An inner wall of the lens barrel may further be provided with limitation slide bars S29 which restrict the lens barrel to move axially only, and thereby the rotational motion of the mover may be converted into the axial linear motion of the lens barrel. Two support pins S26 which are symmetrical with each other may be fixed at the mover S25. Correspondingly, the bump edge of the lens barrel with which the support pins are in contact may also be symmetrical with each other, which can increase the stability of the whole structure. In addition, in order to measure the movement of the lens barrel, a Hall magnetic ring S27 may be bonded to the surface of the mover. A Hall sensor S28 may be correspondingly fixed on the lens barrel. The Hall magnetic ring is also used to provide the magnetic link between the lens barrel (made of steel) and the mover. In order to facilitate the processing, the lens barrel may be made in two parts. The two parts then may be spliced together to form the complete lens barrel. For example, the part with the bump edge may be made from plastic materials and the part with cylindrical shape may be made from magnetic or magnetism reception materials.

### (2) transmission structure with a fit between a transmission rod and a curved sliding slot

In this transmission structure, the trajectory of the mover may be spiral or circular. One of the mover and the lens support member driven thereby may be provided with a first transmission rod extending axially, and the other may be provided with a curved sliding slot at a side wall. A free end of the first transmission rod may be inserted into the curved sliding slot such that the spiral or circular motion of the mover may drive the lens support member to move axially.

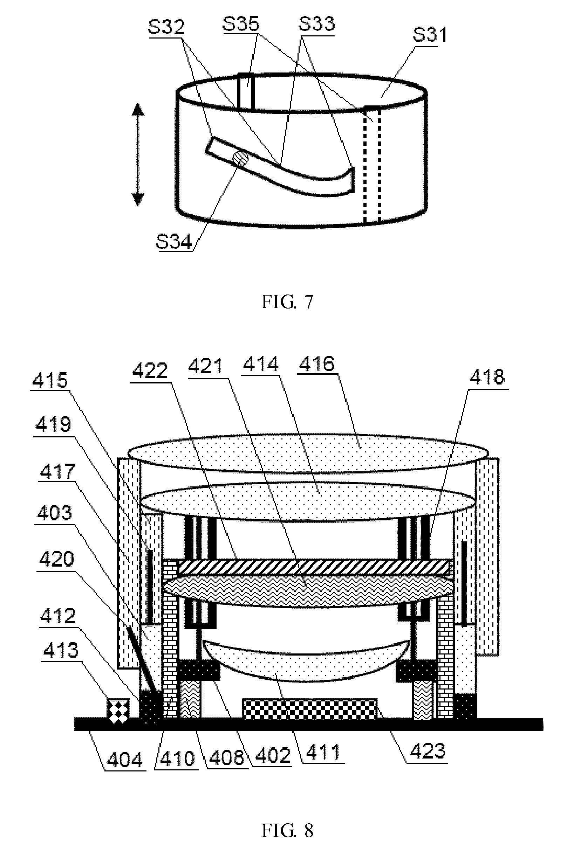

An example is shown in FIG. 7. An outer wall (or inner wall) of a lens barrel S31 acting as the lens support member may be provided, according to the optical design, with a curved sliding slot, where S32 is a telescoping section and S33 is a zooming section. The curve shown in the figure is merely schematic. The upturned portion at the end of S33 may indicate that the optical design of the lens assembly has an inflection point. The specific shape of the curve may be determined according to the optical design. The inner wall of the lens barrel may further be provided with limitation slide bars S35 which may restrict the lens barrel to move axially only. The free end S34 of the first transmission rod fixed to the mover (not shown) may be inserted into the sliding slot. With this transmission structure, because the starting point and the endpoint of the sliding slot can be conveniently set to limit the rotation range of the transmission rod, additional limitation mechanisms of the mover or the lens barrel can be unnecessary. In other embodiments, two transmission rods and corresponding sliding slots may be symmetrically arranged to obtain a more stable structure.

Two transmission structures by which the mover of the zooming motor drives the lens support member are shown in FIG. 6 and FIG. 7, where the bump edge or the curved sliding slot include two sections which respectively correspond to the telescoping motion and the zooming motion of the zoom lens group. Therefore, the telescoping process and the zooming process of the lens assembly can be implemented integrally.

### (3) direct contact transmission structure

In this transmission structure, the trajectory of the mover may be spiral or linear. For example, the mover of the disc electromagnetic motor or the ultrasonic motor can generate a spiral trajectory by a screwed fit with the stator. The mover of the voice coil motor may have a linear trajectory, and an end face of the mover may be kept in contact with an end of the lens support member driven by the mover to directly drive the lens support member to move axially.

It should be noted that in a case that the mover of the zooming motor needs to simultaneously drive two or more lens support members (for example, two or more zoom lens barrel which are sleeved with each other), the mover may utilize the same transmission structure or jointly utilize different transmission structures. For example, the mover may drive one lens barrel by the direct contact transmission structure, and simultaneously drive the other lens barrel which is sleeved at outside of the one lens barrel by the transmission rod. Or, support pins (or bump edges) may be arranged at the mover in different radial direction in order to drive the lens barrels which have calibers corresponding to the position of the support pins, respectively. Or, the mover may drive one lens barrel by the support pin, and simultaneously drive the other lens barrel which is sleeved at outside of the one lens barrel by the transmission rod. Or, the mover may simultaneously drive two lens barrels which are sleeved with each other by different transmission rods.

The zoom lens assembly of the present disclosure may be obtained based on the zoom lens assembly driving device described above, for example by installing the lens group which is mounted at a corresponding lens support member and needs to be moved to the zoom lens assembly driving device according to the transmission structure of the mover. Of course, according to the requirements of the optical design, a fixed focus lens group and/or zoom lens group may further be provided. The optical axis of the fixed lens group may also coincide with the optical axis of the moving lens group. In addition, other lens components may further be provided as needed. For example, a shutter and/or an aperture controller, etc. may be arranged at an upper surface or a lower surface of the fixed lens group.

The zoom lens assembly of the present disclosure will be described in following with reference to the specific embodiments. However, what have already been described in details above, such as the specific structure of the motor or the transmission structure of the mover to the lens support member, etc. will not be described again.

### Embodiment 1

An embodiment of the zoom lens assembly of the present disclosure is schematically shown in FIG. 8. The focusing motor may be a voice coil motor and the zooming motor may be a disc electromagnetic motor. The disc electromagnetic motor may be sleeved at outside of the voice coil motor. The two motors may share the stator.

In the present embodiment, a first positioning sleeve 410 acting as the stator may be fixed on a PCB or FPC substrate (which will be simply referred to as "substrate" below) 404. A mover 402 and a spring 408 of the voice coil motor may be arranged at the inside of the first positioning sleeve. The mover 402 may be a hollow magnetic ring and a first focus lens group 411 may be installed therein.

A mover 403 of the disc electromagnetic motor may be arranged at the outside of the first positioning sleeve. A Hall magnetic ring 412 may be fixed at the bottom of the mover 403. A Hall sensor 413 may be fixed on the substrate at the outside of the mover 403. A first zoom lens group 414 may be installed in a first zoom lens barrel 415 and a third zoom lens group 416 may be installed in a second zoom lens barrel 417. The second zoom lens barrel may be sleeved at outside of the first zoom lens barrel and both of the zoom lens barrels may be provided with limitation slide bar 418 extending axially such that the two zoom barrels can move only in the axial direction. The limitation slide bar 418 may have a plurality of sections so as to be telescoped along with the zoom lens barrel. The mover 403 may drive the first zoom lens barrel through a bump edge 419 and simultaneously drive the second zoom lens barrel through a first transmission rod 420. In other embodiments, the disc electromagnetic motor may also use two transmission rods to respectively drive the first zoom lens barrel and the second zoom lens barrel. For a simple zoom lens assembly, the third zoom lens group may be omitted. In the present embodiment, the bump edge and the transmission rod can integrally implement the telescoping and zooming motion by a sectioned curved motion such that the lens assembly can have compact size in a retracted state.

A second zoom lens group 421 may be fixedly mounted in the first positioning sleeve and located between the first zoom lens group and the first focus lens group. A shutter and/or an aperture controller 422 may further be arranged at the upper surface of the second zoom lens group. A sensitive chip 423 may be arranged on the substrate and be on the optical axis, and the circuit and components required by the sensitive chip may be correspondingly arranged on the substrate to obtain a complete zoom lens assembly.

In the present embodiment, the voice coil motor may work in the vicinity of a force balance position of a preexisting magnetic force (for example, which may include the magnetic force between the magnetic ring 402 and the steel spring 408 and steel first positioning sleeve 410) and the elastic force of the spring 408 to reduce the driving current required by the voice coil motor. The spring 408 may be a steel wire without electricity, or may also be a steel spring with electricity which is coated with an insulation layer.

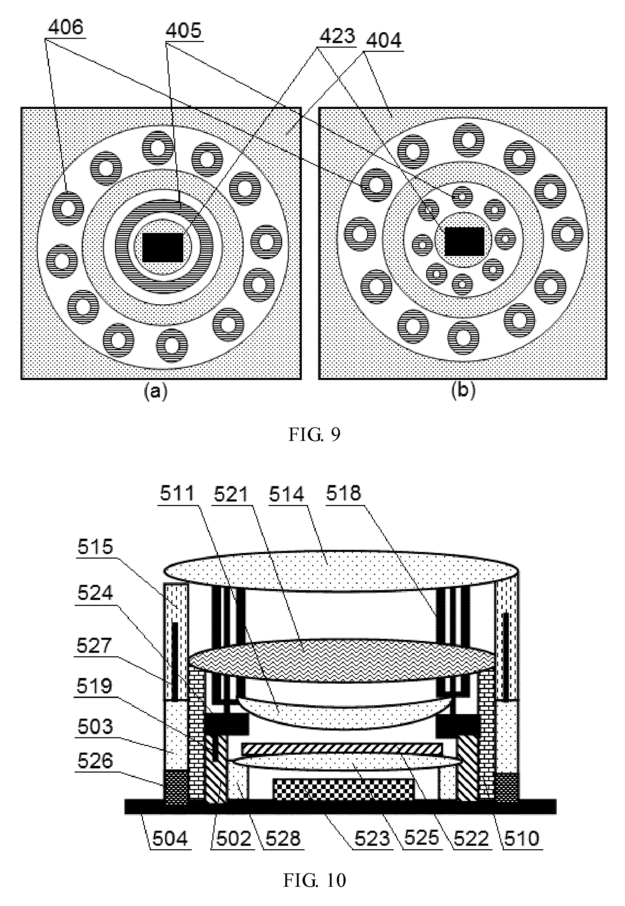

In the present embodiment, two exemplary implements of the stator winding of the disc electromagnetic motor and the voice coil motor are shown in FIG. 9. In FIG. 9, the stator windings 405 of the voice coil motor which are located at the inner layer and the stator windings (magnetic pole coils) 406 of the disc electromagnetic motor which are located at the outer layer may all be integrally formed on the substrate 404 in the forms of printed circuit. The sensitive chip 423 may be located at the inside of the stator windings 405. In FIG. 9(a), the stator winding of the voice coil motor in the inner layer may be a single concentric spiral ring coil. In FIG. 9(b), the stator windings of the voice coil motor in the inner layer may be a multiple-ring chained coil which may be formed by combining a plurality of small spiral coils. The coil with such configuration can generate a larger electromagnetic force using a smaller current, and thereby the power consumption of the voice coil motor can be further reduced. The small coils of the multiple-ring chained coil may be connected in parallel or in series, or may be connected in parallel according to groups or in series according to groups. The switch control of these small coils may be separately achieved, or currents with different magnitude and even different directions may be supplied to these small coils, such that a precise control can be achieved independent of the voltage division precision of the voltage.

It should be noted that the coil configuration in FIG. 9(b) may also be used to implement the stator windings of two sleeved disc electromagnetic motors. The stator windings of the disc electromagnetic motor and the multiple-ring chained coil of the voice coil motor may have the same printed circuit configuration, but may be controlled by different ways. The disc electromagnetic motor may achieve a precise step control, while the voice coil motor achieve a precise positioning of the mover by the series or parallel connection of the plurality of small coils and the voltage adjustment.

### Embodiment 2

Another embodiment of the zoom lens assembly of the present disclosure is shown in FIG. 10, in which two sleeved disc electromagnetic motors may be used as the focusing motor and the zooming motor. The two disc electromagnetic motors may share a stator.

In the present embodiment, a first positioning sleeve 510 acting as the stator may be fixed on a substrate 504. A mover 502 of the disc electromagnetic motor for focusing may closely abut against the inside of the first positioning sleeve. The mover 502 may be a sleeve type magnetic pole ring and may drive a lens support ring 524 made from magnetism reception materials (for example, iron or steel, etc.) through a bump edge 519. The lens support ring 524 may be provided with limitation slide bars 518 (which may have a plurality of sections) extending axially. A first focus lens group 511 may be installed in the lens support ring 524. The lens support ring 524 may be kept in contact with the magnetic pole ring 502 by a magnetic force therebetween.

A stationary second focus lens group 525 may be installed below the first focus lens group. For example, the second focus lens group may be fixed in a second positioning sleeve 528. The second positioning sleeve may be located at the inside of the mover 502 and fixed on the substrate. A shutter and/or an aperture controller 522 may further be arranged on the upper surface (or lower surface) of the second focus lens group.

A mover 503 of the disc electromagnetic motor for zooming may closely abut against the outside of the first positioning sleeve. A magnetic pole ring 526 may be arranged at the bottom of the mover 503. The upper sleeve of the mover may be made from magnetic or magnetism reception materials and may drive a first zoom lens barrel 515 through bump edges (or transmission rods) 527. The first zoom lens barrel may similarly be provided with limitation slide bars 518 extending axially. A first zoom lens group 514 may be installed in the first zoom lens barrel. The bump edges of the first zoom lens barrel may be at leas partially made from magnetic materials or magnetism reception materials and be kept in contact with the mover 503 by a magnetic force between the bump edges and the magnetic pole ring.

A second zoom lens group 521 may be fixed mounted in the first positioning sleeve and located between the first zoom lens group and the first focus lens group. A sensitive chip 523 may be arranged on the substrate and be on the optical axis, and the circuit and components required by the sensitive chip may be correspondingly arranged on the substrate to obtain a complete zoom lens assembly.

In the present embodiment, the stator windings of the two sleeved disc electromagnetic motors may be formed from the printed circuit as shown in FIG. 9(b), and both of the two disc electromagnetic motors may be controlled by step control such that a precise positioning can be achieved without using a position measurement system. In the case that both motors are controlled by step control, the control circuit can be unified such that the control system can be simplified.

In addition, in the present embodiment, there is only one movable zoom lens group. In other embodiments, besides the first zoom lens group, a movable third zoom lens group may further be provided. The third zoom lens group may be driven by the mover of the zooming motor through a transmission rod (with reference to embodiment 1) in order to increase the zoom factor of the lens assembly.

### Embodiment 3

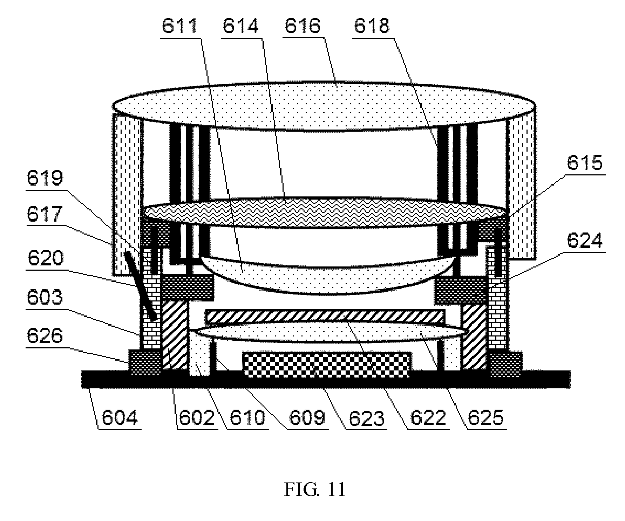

An embodiment of the zoom lens assembly of the present disclosure is shown in FIG. 11, in which the focusing motor may be a polyhedral ultrasonic motor, the zooming motor may be a disc electromagnetic motor, the disc electromagnetic motor may be sleeved at outside of the ultrasonic motor, and the two motors may share a stator.

In the present embodiment, a first positioning sleeve 610 acting as the stator may be fixed on a substrate 604. A mover 602 of the ultrasonic motor may be sleeved at the outside of the first positioning sleeve. An inner wall of the mover 602 may be fitted with an outer wall of the first positioning sleeve by screw threads. An inner wall of the first positioning sleeve may be a polyhedron, each surface of which may be provided with piezoelectric ceramics sheets 609 and corresponding power supply lines (not shown). The mover 602 may drive a lens support ring 624 made from permanent magnetic materials by a direct contact transmission structure. A rotation limitation mechanism (not shown) for the mover 602 may be provided in order to ensure that the mover can adjust the focus in a reasonable range. Limitation slide bars 618 (which may have a plurality of sections) extending axially may be arranged on the lens support ring 624, which may be used to convert the spiral motion of the mover 602 into an axial motion. A first focus lens group 611 may be installed in the lens support ring 624. The mover 602 of the ultrasonic motor may be made from magnetism reception materials. A relative sliding in a circumferential direction may exist between the lens support ring 624 and the mover 602, but the lens support ring 624 and the mover 602 may be kept in contact with each other under the action of the magnetic force.

A stationary second focus lens group 625 may be installed in the first positioning sleeve and located below the first focus lens group. A shutter and/or an aperture controller 622 may be arranged on the upper surface of the second focus lens group.

A mover 603 of the disc electromagnetic motor may be arranged at the outside of the mover 602 of the ultrasonic motor. An outer wall of the mover 602 may be a smooth cylindrical surface and may closely abut against an inner wall of the mover 603. The two movers may share the first positioning sleeve as the stator. A magnetic pole ring 626 may be arranged at the bottom of the mover 603. An upper sleeve of the mover 603 may be made from magnetic materials or magnetism reception materials and may drive a lens support ring 615 made from permanent magnetic materials through bump edges (or transmission rods) 619. The lens support ring 615 may similarly be provided with limitation slide bars 618 extending axially. A first zoom lens group 614 may be installed in the lens support ring 615. The lens support ring 615 may be kept in contact with the mover 603 by a magnetic force between the lens support ring 615 and the magnetic pole ring 626. The mover 603 may further drive a second zoom lens barrel 617 through a first transmission rod 620. The second zoom lens barrel may similarly be provided with limitation slide bars 618 extending axially. A third zoom lens group 616 may be installed in the second zoom lens barrel.

A sensitive chip 623 may be arranged on the substrate and be on the optical axis, and the circuit and components required by the sensitive chip may be correspondingly arranged on the substrate to obtain a complete zoom lens assembly.

In the present embodiment, both of the two zoom lens groups may be movable lens group. The mover of the disc electromagnetic motor may have a circular or spiral trajectory. For example, screw threads may be arranged on the inner wall of the mover of the disc electromagnetic motor, and the outer wall of the mover of the ultrasonic motor may be correspondingly provided with screw threads which cooperate with the screw threads of the mover of the disc electromagnetic motor, and thereby the mover of the disc electromagnetic motor can directly drive the lens support member in which the first zoom lens group is installed.

In addition, in the present embodiment, the movers of the disc electromagnetic motor and the ultrasonic motor may closely abut against each other and may lead to interference of the motions with each other, which can be avoided by well-designed control scheme. Obviously, since the ultrasonic motor adopts screwed drive mode, the motion of the mover of the disc electromagnetic motor will not affect the ultrasonic motor. The disc electromagnetic motor can be controlled by step control. Because the stepping motor can be positioned by the magnetic poles, the disc electromagnetic motor will also not be affected by the ultrasonic motor. Furthermore, lubricating oil may be added between the contact surfaces of the mover of the disc electromagnetic motor and the mover of the ultrasonic motor in order to eliminate the mutual affects of the two motors even better.

In the three embodiments above, four lens groups are used. When it is necessary to further simplify the structure, one stationary lens group can be omitted. For example, one stationary focus lens group or zoom lens group can be omitted. When more lens groups are needed, it can be readily implemented by adding transmission rods and linkage mechanisms or by combining the zoom/focus driving structures of the embodiments described above.

The principles and embodiments of the present disclosure have been described in the above with reference to specific examples. However, it should be understood that the embodiments described above are merely used to facilitate the understanding to the present disclosure, but should not be interpreted as limitations thereto. A variety of modifications to the specific embodiments described above can be made by a person ordinarily skilled in the art according the concepts of the present disclosure.

## Claims

1. A zoom lens assembly driving device, comprising:
a focusing motor (402, 502, 602) which is used to drive a first focus lens group (411, 511, 611) to move axially; and
a zooming motor (403, 503, 603) which is used to drive a first zoom lens group (414, 514, 614) to move axially;
wherein the focusing motor and/or the zooming motor is a disc electromagnetic motor, a stator and a mover of the disc electromagnetic motor are hollow, and a rotation axis of the mover of the disc electromagnetic motor coincides with an optical axis of the first focus lens group and the first zoom lens group.

2. The device of claim 1, wherein the zooming motor is sleeved at outside of the focusing motor.

3. The device of claim 1, wherein the lens groups driven thereby are fixed in corresponding lens support member which is radially fixed,
a trajectory of the mover of the focusing motor and/or the zooming motor is spiral or circular, one of the mover and the lens support member driven thereby is provided with a support pin extending axially on an end face and the other is provided with a bump edge on an end face, and a free end of the support pin is kept in contact with the bump edge such that a spiral or circular motion of the mover drives the lens support member to move axially; or
a trajectory of the mover of the focusing motor and/or the zooming motor is spiral or circular, one of the mover and the lens support member driven thereby is provided with a first transmission rod extending axially and the other is provided with a curved sliding slot at a side wall, and a free end of the first transmission rod is inserted into the curved sliding slot such that a spiral or circular motion of the mover drives the lens support member to move axially; or
a trajectory of the mover of the focusing motor and/or the zooming motor is spiral or linear, and an end face of the mover is kept in contact with an end of the lens support member driven thereby to directly drive the lens support member to move axially.

4. The device of claim 3, wherein the zooming motor adopts a transmission structure comprising the support pin or the transmission rod, and a shape of the bump edge or the curved sliding slot comprises two curves which corresponds to a telescoping motion and zooming motion of the zoom lens group, respectively.

5. The device of claim 4, wherein the zooming motor is further used to drive a third zoom lens group (416, 616) to move axially through the transmission structure comprising the support pin or the transmission rod.

6. The device of claim 3, wherein the mover of the focusing motor and/or the zooming motor is kept in contact with the lens support member driven thereby by an elastic force of a spring or a magnetic force.

7. The device of claim 3, wherein the lens support member is provided with a limitation slide bar (418, 518, 618) extending axially such that the lens support member can only move axially.

8. The device of claim 1, wherein the disc electromagnetic motor is controlled by step control.

9. The device of claim 1, further comprising a Hall magnetic ring (412) and a Hall sensor (413), wherein one of the Hall magnetic ring and the Hall sensor is fixed at the mover of the zooming motor and the other is fixed with respect to the stator of the zooming motor, the Hall sensor outputs measurement signals, and the measurement signals represent a rotation angle of the Hall magnetic ring with respect to the Hall sensor.

10. The device of any one of claims 1-9, wherein the zooming motor is a disc electromagnetic motor, the focusing motor is a voice coil motor, and a stator and a mover of the voice coil motor are hollow and are connected by an elastic member.

11. The device of claim 10, wherein, when a power is not supplied, the elastic member of the voice coil motor is balanced at a force balance position under action of an elastic force of its own and a preexisting magnetic force opposite to the elastic force in direction, and the force balance position is located at one of or between two endpoints of a working range of the elastic member.

12. The device of any one of claims 1-11, wherein a stator winding of the focusing motor and/or the zooming motor is made from printed circuit, the printed circuit is formed on a printed circuit board or flexible printed circuit board, the printed circuit board or flexible printed circuit board is formed from one or two or more layers of circuit, and/or the printed circuit boar or flexible printed circuit board is used to act as a substrate of the zoom lens assembly.

13. The device of any one of claims 1-9, wherein the zooming motor is a disc electromagnetic motor, the focusing motor is an ultrasonic motor, a stator and a mover of the ultrasonic motor are hollow, and a rotation axis of the mover of the ultrasonic motor coincides with a rotation axis of a mover of the disc electromagnetic motor.

14. The device of claim 13, wherein the mover of the ultrasonic motor is sleeved at outside of the stator, an inner wall of the mover is fitted with an outer wall of the stator by screw threads, and an inner wall of the stator is a polyhedron each surface of which is provided with piezoelectric materials (609).

15. A zoom lens assembly, wherein the zoom lens assembly comprises the zoom lens assembly driving device as any one of claims 1-14 and a lens group which is installed in corresponding lens support member and needs to be moved.

16. The lens assembly of claim 15, further comprising a second focus lens group (525, 625) which is fixedly mounted with respect to the stator of the focusing motor, wherein an optical axis of the second focus lens group coincides with an optical axis of the first focus lens group; and/or
further comprising a second zoom lens group (421, 521) which is fixedly mounted with respect to the stator of the zooming motor, wherein an optical axis of the second zoom lens group coincides with an optical axis of the first zoom lens group.

17. The lens assembly of claim 16, wherein a shutter and/or an aperture controller (422, 522, 622) is further arranged above or below the second focus lens group or the second zoom lens group.
